# EUROPÄISCHE PATENTSCHRIFT

(11) **EP 2 660 508 B1**
(45) Veröffentlichungstag und Bekanntmachung des Hinweises auf die Patenterteilung: **13.10.2021**
(21) Anmeldenummer: 13166014.4
(22) Anmeldetag: 30.04.2013
(51) Int. Cl.: F21V 8/00

(54) **Leuchtanordnung für Kraftfahrzeuge**
Lighting arrangement for motor vehicles
Agencement lumineux pour véhicules automobiles

(30) Priorität: 04.05.2012 AT 501562012
(43) Veröffentlichungstag der Anmeldung: 06.11.2013
(73) Patentinhaber: ZKW Group GmbH, 3250 Wieselburg (AT)
(72) Erfinder: Taudt, Lukas, 3250 Wieselburg (AT)
(74) Vertreter: Patentanwaltskanzlei Matschnig & Forsthuber OG

(56) Entgegenhaltungen:
- EP-A1- 2 261 083
- WO-A1-2009/110476
- DE-A1-102011 009 100
- None

## Beschreibung

Die Erfindung bezieht sich auf eine Leuchtanordnung für Kraftfahrzeuge mit zwei Lichtleitern, die optische Störstellenanordnungen zur Lichtabstrahlung aufweisen, sowie mit zwei Lichteinspeisestücken, deren Lichteintrittsflächen Lichtquellen zur Einspeisung von Licht in die Lichtleiter zugeordnet sind.

Eine solche Leuchtanordnung ist aus der DE 101 39 578 A1 ist bekannt geworden, nämlich eine Innenleuchte für Fahrzeuge, welche einen Lichtleiterstrang mit zwei an diesen anschließenden Licht-Zuführzweigen aufweist. Die beiden Zuführzweige mit Rechteckquerschnitt konvergieren, ausgehend von Lichteintrittsflächen, und stoßen auf einen Überleitungsbereich, welcher den Rechteckquerschnitt kontinuierlich in einen Kreisquerschnitt überführt, um sodann in den eigentlichen Lichtleiterstrang mit einem optischen Störstellenbereich anzuschließen. Um eine gewünschte Leuchtfarbe zu erreichen, sind an den Lichteintrittsflächen Leuchtdioden mit unterschiedlicher Spektralverteilung, z.B. eine weiße LED und eine rote LED angeordnet, wobei die Lichtbündel der beiden Leuchtmittel divergent in den Lichtleiterstrang eingekoppelt und miteinander vermischt werden.

Die DE 10 2005 019 093 A1 zeigt einen mehrgliedrigen Lichtleiter, bei welchem Licht in z.B. drei unterschiedlich stark gekrümmte Schenkel, die keilförmig in einen gemeinsamen Abschnitt übergehen, eingestrahlt wird. Durch die unterschiedliche Krümmung der einzelnen Schenkel treffen die Lichtstrahlen mit unterschiedlichen Einfallswinkeln auf die Seiten- und Auskoppelfläche des Lichtleiters, sodass Licht in einen breiteren Raumwinkel abgestrahlt wir, um beispielsweise gesetzlichen Vorschriften zu entsprechen. Eine Blende schirmt im Bereich der gekrümmten Schenkel unbeabsichtigt und ungesteuert austretendes Licht ab.

Der Erfindung liegt die Aufgabe zugrunde, eine Leuchtanordnung zu schaffen, bei welcher an zumindest zwei Stellen Licht eingekoppelt werden kann, beispielsweise um genügend hohe Leuchtdichten erzeugen zu können, ohne eine übermäßige Erwärmung an einer Lichteinspeisestelle zu erhalten. Es hat sich nämlich gezeigt, dass es bei Verwendung zweier getrennter Lichtleiter schwierig ist, einen homogenen Übergang der Leuchtdichte zwischen solchen Lichtleitern zu erreichen.

Diese Aufgabe wird, ausgehend von einer Leuchtanordnung der eingangs genannten Art dadurch gelöst, dass erfindungsgemäß an dem zweiten Lichtleiter, der kürzer als der erste Lichtleiter ist, über einen Abschnitt seiner Länge eine Störstellenanordnung ausgebildet ist, der zweite Lichtleiter an einer Einmündungsstelle in den ersten Lichtleiter einmündet und in Lichtabstrahlrichtung vor dem ersten Lichtleiter angeordnet ist, wobei in Lichtabstrahlrichtung die Störstellenanordnung des zweiten Lichtleiters in einem Übergangsbereich an die Störstellenanordnung des ersten Lichtleiters anschliesst, wobei der erste und der zweite Lichtleiter einstückig gespritzt ausgebildet sind.

Dank der Erfindung erhält man trotz Einspeisung des Lichtes an zwei räumlich getrennten Stellen einen optisch und ästhetisch zufriedenstellenden Übergang zwischen den beiden Lichtleitern.

Im Sinne eines gleichmäßigen Leuchtbildes kann vorgesehen sein, dass die Störstellenanordnung des zweiten Lichtleiters in dem Übergangsbereich an die Störstellenanordnung des ersten Lichtleiters überlappend anschließt. Besonders vorteilhaft ist es in diesem Fall, wenn in dem Überlappungsbereich die Dichte der Störstellen beider Lichtleiter in dem Übergangsbereich abnimmt.

Es ist weiters zweckmäßig, wenn sich die Störstellenanordnung des ersten Lichtleiters im Wesentlichen über dessen gesamte Länge erstreckt.

Besonders bei Verwendung in Zusammenhang mit einem Scheinwerfer ist es auch vorteilhaft, wenn der erste Lichtleiter über den größten Teil seiner Länge in einem Mittelbereich im Wesentlichen in einer Ebene liegt, innerhalb der ein Endbereich abgewinkelt ist.

In der Praxis und insbesondere bei Verwendung in Zusammenhang mit einem Scheinwerfer kann es empfehlenswert sein, wenn sowohl der erste Lichtleiter an seinem Einspeiseende über einen Bereich als auch der zweiten Lichtleiter ist an seinem Einspeiseende über einen Bereich abgewinkelt ist und die abgewinkelten Bereiche beider Lichtleiter annähernd parallel zueinander verlaufen.

Um einen guten und stabilen Übergang der leuchtenden Bereiche beider Lichtleiter sicherzustellen, sind der erste und der zweite Lichtleiter einstückig gespritzt ausgebildet.

Die Erfindung samt weiteren Vorteilen ist im Folgenden an Hand einer beispielsweisen Ausführungsform näher erläutert, die in der Zeichnung veranschaulicht ist. In dieser zeigen
Fig. 1 eine Ansicht eine Leuchtanordnung nach der Erfindung mit drei Lichtleitern in einer Ansicht von vorne,
Fig. 2 eine Leuchtanordnung nach der Erfindung mit drei Lichtleitern in einer Ansicht von hinten,
Fig. 3 eine Leuchtanordnung nach der Erfindung mit zwei Lichtleitern in einer allgemeinen perspektivischen Ansicht,
Fig. 4 eine vergrößerte Teilansicht in einer Darstellung ähnlich der Fig. 2,
Fig. 5 eine vergrößerte Teilansicht in einer Darstellung ähnlich der Fig. 3,
Fig. 6 eine weiter vergrößerte Teilansicht ähnlich der Fig. 4,
Fig. 7 eine weitere perspektivische Teildarstellung einer Leuchtanordnung nach der Erfindung, welche den Übergangsbereich genauer zeigt,
Fig. 8 einen vergrößerten Bereich der Fig. 7, wobei die Lichtleiter nach den Linien A-A und B-B der Fig. 7 aufgeschnitten sind, und
Fig. 9 eine weitere perspektivische Teildarstellung einer gesamten Leuchtanordnung nach der Erfindung, wobei die Lichtleiter gleichfalls nach den Linien A-A und B-B der Fig. 7 aufgeschnitten sind.

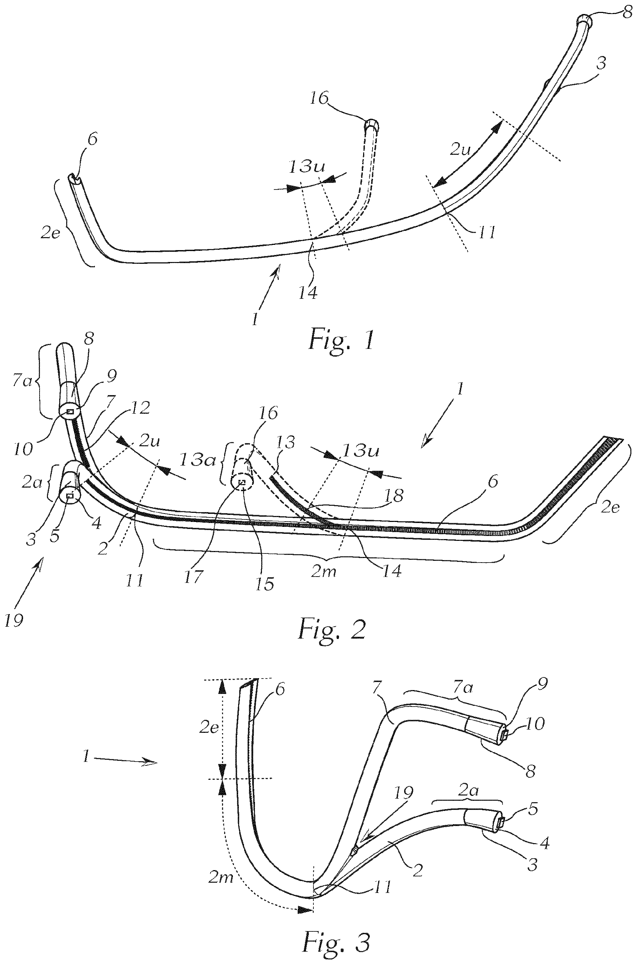

Die in den Figuren gezeigte Leuchtanordnung 1 kann beispielsweise einen Scheinwerfer eines Fahrzeuges über einen Abschnitt seines Umfanges umrahmen und als Fahrtrichtungsanzeiger oder als Tagfahrlicht dienen. In diesem Fall ergibt sich von vorne gesehen die Ansicht nach Fig. 1, doch könnte die Leuchtanordnung 1 auch für andere Zwecke in einem Fahrzeug verwendet werden, etwa an der Hinterseite eines Fahrzeugs.

Die Leuchtanordnung besteht aus einem ersten Lichtleiter 2, der an seinem Lichteintrittsende ein Lichteinspeisestück 3 besitzt, wobei dessen Lichteintrittsfläche 4 in bekannter Weise eine erste Lichtquelle 5, beispielsweise eine Leuchtdiode, zur Einspeisung von Licht in den Lichtleiter zugeordnet ist. Bei dem gezeigten Beispiel sitzt die Lichtquelle 5 unmittelbar an der Lichteintrittsfläche 4. Der erste Lichtleiter 2 liegt über den größten Teil seiner Länge in einem Mittelbereich 2m im Wesentlichen in einer Ebene, innerhalb der ein Endbereich 2e (in Fig. 2 rechts) bei diesem Ausführungsbeispiel unter etwa 45° nach oben abgewinkelt ist. An seinem Einspeiseende ist bei dieser Ausführung der erste Lichtleiter 2 über einen Bereich 2a aus der genannten Ebene heraus nach hinten abgewinkelt.

Wie am besten aus Fig. 2 ersichtlich, erstreckt sich über den größten Teil der Länge des ersten Lichtleiters 2 an dessen Hinterseite eine Störstellenanordnung 6, die in bekannter Weise beispielsweise aus Prismen, einer Aufrauung od. dgl. besteht. Genauer gesagt, verläuft die Störstellenanordnung über den abgewinkelten Endbereich 2e, den im Wesentlichen geraden Bereich 2m sowie über einen leicht gekrümmten Übergangsbereich 2u, der in Fig. 1 und Fig. 2 von punktierten Linien begrenzt ist, und dessen Bedeutung weiter unten erläutert wird.

Die Leuchtanordnung 1 weist auch einen zweiten Lichtleiter 7 auf, der gleichfalls ein Lichteinspeisestück 8 besitzt, dessen Lichteintrittsfläche 9 eine zweite Lichtquelle 10 zugeordnet ist, die auch bei dem zweiten Lichtleiter 7 unmittelbar an der Lichteintrittsfläche 9 sitzt.

Der zweite Lichtleiter 7, der bei diesem Beispiel erheblich kürzer als der erste Lichtleiter 2 ist, mündet an einer Einmündungsstelle 11 in den ersten Lichtleiter 2, die sich am lichteintrittsseitigen Ende des Mittelbereiches 2m und am Beginn des Übergangsbereiches 2u befindet. Auch der zweiten Lichtleiter 7 ist an seinem Einspeiseende 7 über einen Bereich 7a abgewinkelt, wobei die abgewinkelten Bereiche 2a und 7a beider Lichtleiter 2,7 annähernd parallel zueinander verlaufen.

Bei dem zweiten Lichtleiter 7 ist, ebenso wie bei dem ersten Lichtleiter 2, an der Hinterseite über einen Abschnitt seiner Länge eine Störstellenanordnung 12 ausgebildet. Dabei liegt der zweite Lichtleiter 7 räumlich so bezüglich des ersten Lichtleiters 2, dass von vorne gesehen - siehe Fig. 1 - der zweite Lichtleiter 7 zumindest mit jenem Abschnitt, der mit der Störstellenanordnung 12 versehen ist, genau hinter dem ersten Lichtleiter 2 liegt. In Fig. 1 ist daher nur der Rand des verbreiterten Teils des Lichteinspeisestücks 8 zu sehen.

Die Ausbildung der erfindungsgemäßen Leuchtanordnung führt dazu, dass die Störstellenanordnung 12 des zweiten Lichtleiters 7 von vorne gesehen an die Störstellenanordnung 6 des ersten Lichtleiters 2 anschließt, oder anders ausgedrückt, dass - wiederum von vorne gesehen - die Störstellenanordnung 12 des zweiten Lichtleiters 7 etwa dort endet, wo die Störstellenanordnung 6 des ersten Lichtleiters 2 beginnt. Dadurch leuchtet der erste Lichtleiter 2 in dem Übergangsbereich 2u durch den zweiten Lichtleiter 7 hindurch nach vorne und es ergibt sich ein homogenes Leuchtbild auch an dem Übergang der Störstellenanordnungen 6 und 12.

Um Missverständnisse bezüglich der verwendeten Terminologie zu vermeiden, sei hier angemerkt, dass die an einer Hinterseite eines Lichtleiters angeordneten Störstellenanordnungen in bekannter Weise das Licht durch den Querschnitt eines Lichtleiters hindurch nach vorne abstrahlen.

Es kann aber auch zweckmäßig sein, wenn die Störstellen der beiden Lichtleiter 2, 7 im Übergangsbereich aneinander überlappend anschließen, wobei z.B. die Dichte der Störstellen beider Lichtleiter in dem Übergangsbereich abnimmt, und die Summe der Leuchtdichten beider Lichtleiter ein insgesamt gleichmäßiges Leuchtbild erzeugt.

Natürlich schließt die Erfindung nicht aus, dass weitere Lichtleiter in den ersten oder zweiten Lichtleiter münden und Licht einspeisen, wie in den Figuren durch einen strichliert angedeuteten dritten Lichtleiter 13 gezeigt ist, welcher gleichfalls über einen Bereich 13a nach hinten abgewinkelt ist, ein Lichteinspeisestück 16 mit einer Lichteintrittsfläche 15 für eine dritte Lichtquelle 17 sowie eine Störstellenanordnung 18 besitzt und an einer Einmündungsstelle 14 in den ersten Lichtleiter 2 mündet.

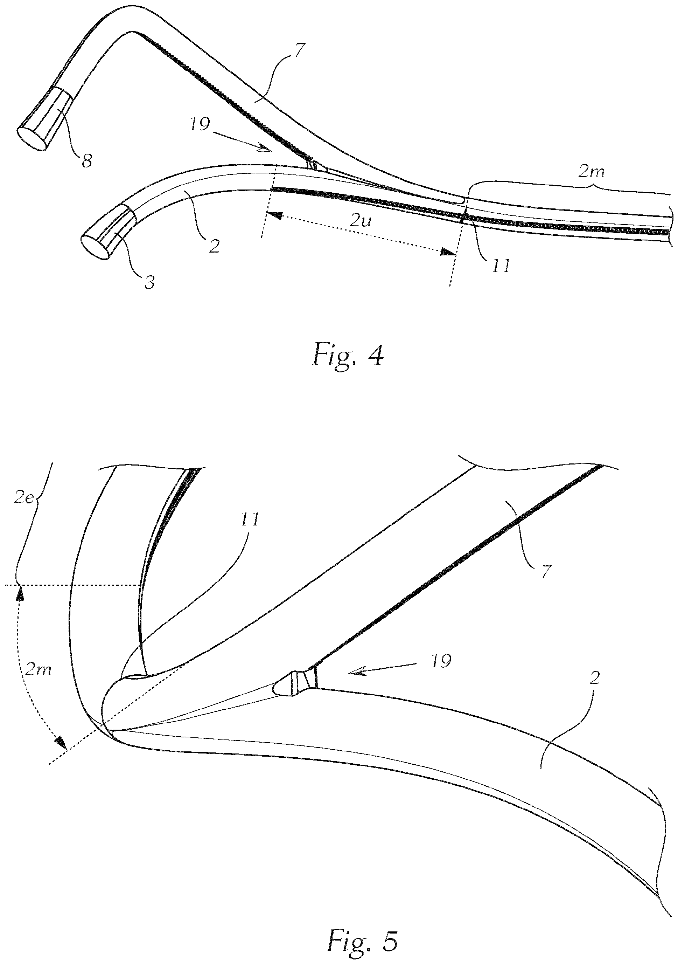

Ein besonderes Augenmerk muss dem Zusammenführbereich der Lichtleiter geschenkt werden, der vor allem in den Fig. 4 bis 9 für den ersten und den zweiten Lichtleiter 2 und 7 näher dargestellt und mit dem Bezugszeichen 19 bezeichnet ist. Die Überschneidung der Lichtleiter muss lichttechnisch sinnvoll sein, doch hängt die Formgebung auch von der verwendeten Fertigungstechnik, insbesondere von den Werkzeugen bei Spritzgussverfahren ab. Die Werkzeuge sollten nämlich wiederverwendbar sein, sodass sie nach dem Gießen getrennt werde. Dadurch aber entstehen an den Trennfugen der Werkzeuge sichtbare Randlinien.

Der Zusammenführbereich 19 muss demnach sowohl einem lichttechnischen als auch fertigungstechnischen Kompromiss unterliegen. Dabei soll unter einer Optimierung der Lichtverluste und der Homogenität des Lichtbildes die Fertigung im Spritzguss durch Formwerkzeuge und anschließender Werkzeugtrennung unter Berücksichtigung von Entformeinrichtungen möglich sein. Die Form und Gestalt dieses Zusammenführbereiches 19 ist somit stark von der jeweiligen Geometrie der Leuchtstäbe (Lage im dreidimensionalen Raum, Winkel und Verlauf zueinander) und der damit verbundenen Beschränkungen durch Werkzeuge- und Entformungsmöglichkeiten abhängig, was in den Fig. 4 bis 9 für den Fachmann gut erkennbar ist.

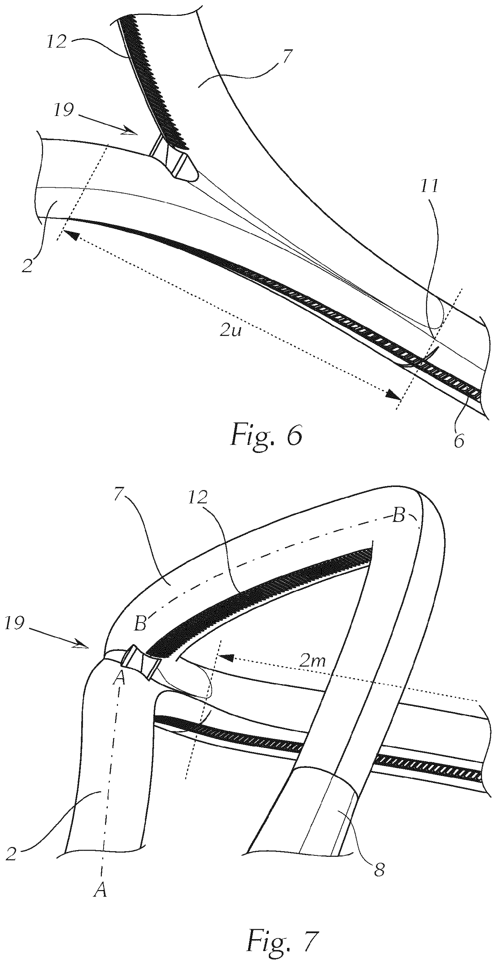

In den genannten Figuren zeigen Fig. 4 eine vergrößerte Teilansicht in einer Darstellung ähnlich der Fig. 2, Fig. 5 eine vergrößerte Teilansicht in einer Darstellung ähnlich der Fig. 3 und Fig. 6 eine weiter vergrößerte Teilansicht ähnlich der Fig. 4.

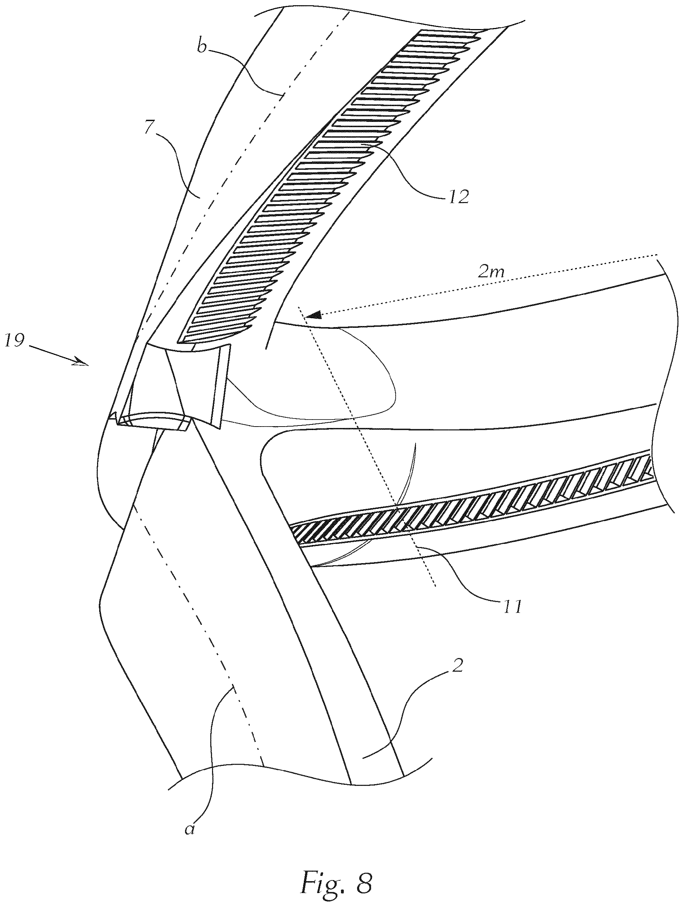

In einer weiteren perspektivischen Teildarstellung nach Fig. 7 einer Leuchtanordnung nach der Erfindung erkennt man den Übergangsbereich genauer, wobei Fig. 8 einen vergrößerten Bereich der Fig. 7 zeigt und die Lichtleiter nach den Linien A-A und B-B der Fig. 7 aufgeschnitten sind. Dabei sind mit a und b die Mittellinien der Lichtleiter 2 und 7 bezeichnet, durch welche die genannten Schnitte geführt sind.

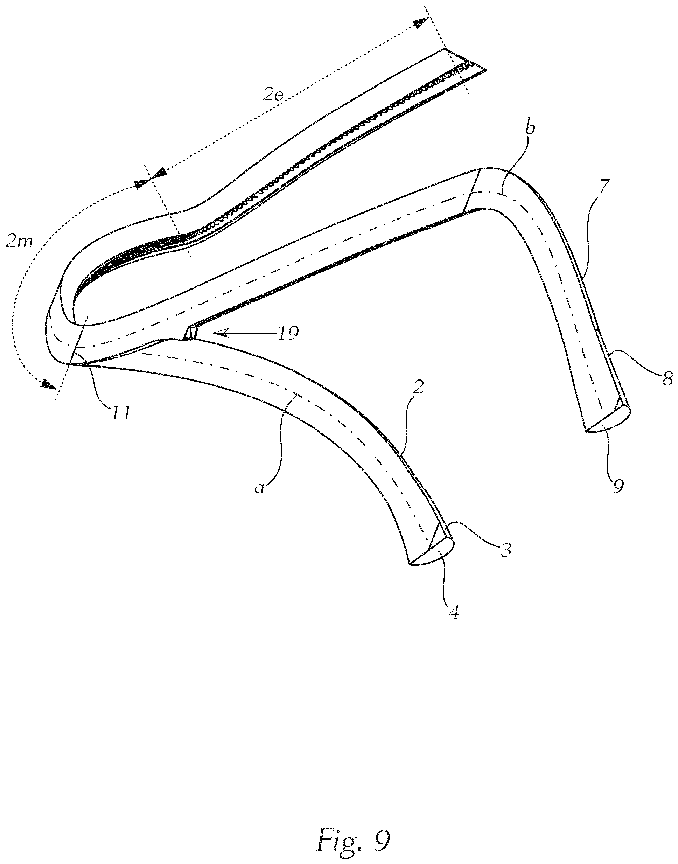

Fig. 9 eine weitere perspektivische Teildarstellung einer gesamten Leuchtanordnung nach der Erfindung, wobei die Lichtleiter 2, 7 gleichfalls nach den Linien A-A und B-B der Fig. 7 aufgeschnitten und deren Mittellinien wieder mit a und b bezeichnet sind.

Die Lichtleiter besitzen einen - meist bevorzugten - kreisförmigen Querschnitt, doch könnte der Querschnitt beispielsweise auch elliptisch oder anders geformt sein. Üblicherweise sind die Lichtleiter aus einem klaren und optisch geeigneten Kunststoffmaterial hergestellt, wobei der erste Lichtleiter 2 mit dem zweiten Lichtleiter 7 einstückig ausgebildet sein kann. Geeignete Kunststoffe sind, um zwei Beispiele zu nennen, Polycarbonat oder Polymethylmethacrylat (Acrylglas).

Die im Zusammenhang mit der Leuchtanordnung 1 verwendeten Begriffe "vorne" und "hinten" sowie "links" und "rechts" sind nicht einschränkend sondern so zu verstehen, dass eine Störstellenanordnung "hinten" an einem Lichtleiter angeordnet ist, wobei Licht nach "vorne" abgestrahlt wird. Nur bei Anordnung der Leuchtanordnung an der Vorderseite eines Fahrzeuges, beispielsweise zur Umrahmung eines Scheinwerfers, werden Begriffe wie "vorne" und "hinten" sowohl auf die Leuchtanordnung als auch auf das Fahrzeug zumindest im Wesentlichen zutreffen.

## Patentansprüche

1. Leuchtanordnung (1) für Kraftfahrzeuge mit zwei Lichtleitern (2, 7), die optische Störstellenanordnungen (6, 12) zur Lichtabstrahlung aufweisen, sowie mit zwei Lichteinspeisestücken (3, 8), welchen Lichtquellen (5, 10) zur Einspeisung von Licht in die Lichtleiter zugeordnet sind,
**dadurch gekennzeichnet, dass**
an dem zweiten Lichtleiter (7), der kürzer als der erste Lichtleiter (2) ist, über einen Abschnitt seiner Länge eine Störstellenanordnung (12) ausgebildet ist,
der zweite Lichtleiter (7) an einer Einmündungsstelle (11) in den ersten Lichtleiter (2) einmündet und in Lichtabstrahlrichtung vor dem ersten Lichtleiter angeordnet ist, wobei in Lichtabstrahlrichtung die Störstellenanordnung (12) des zweiten Lichtleiters (7) in einem Übergangsbereich (2u) an die Störstellenanordnung (6) des ersten Lichtleiters (2) anschließt, wobei der erste und der zweite Lichtleiter (2,7) einstückig gespritzt ausgebildet sind.

2. Leuchtanordnung (1) nach Anspruch 1, **dadurch gekennzeichnet, dass** die Störstellenanordnung (12) des zweiten Lichtleiters (7) in dem Übergangsbereich (2u) an die Störstellenanordnung (6) des ersten Lichtleiters (2) überlappend anschließt.

3. Leuchtanordnung (1) nach Anspruch 2, **dadurch gekennzeichnet, dass** in dem Überlappungsbereich die Dichte der Störstellen (6, 12) beider Lichtleiter (2, 7) in dem Übergangsbereich abnimmt.

4. Leuchtanordnung (1) nach einem der Ansprüche 1 bis 3, **dadurch gekennzeichnet, dass** sich die Störstellenanordnung (6) des ersten Lichtleiters (2) im Wesentlichen über dessen gesamte Länge erstreckt.

5. Leuchtanordnung (1) nach einem der Ansprüche 1 bis 4, **dadurch gekennzeichnet, dass** der erste Lichtleiter (2) über den größten Teil seiner Länge in einem Mittelbereich (2m) im Wesentlichen in einer Ebene liegt, innerhalb der ein Endbereich (2e) abgewinkelt ist.

6. Leuchtanordnung (1) nach einem der Ansprüche 1 bis 5, **dadurch gekennzeichnet, dass** sowohl der erste Lichtleiter (2) an seinem Einspeiseende über einen Bereich (2a) als auch der zweiten Lichtleiter (7) ist an seinem Einspeiseende über einen Bereich (7a) abgewinkelt ist und die abgewinkelten Bereiche (2a und 7a) beider Lichtleiter (2,7) annähernd parallel zueinander verlaufen.

## Claims

1. Illuminating arrangement (1) for motor vehicles, having two light guides (2, 7) which have optical impurity arrangements (6,12) for emitting light, and having two light feed pieces (3, 8) to which light sources (5, 10) for feeding light into the light guides are assigned,
**characterized in that**
an interference point arrangement (12) is formed on the second light guide (7), which is shorter than the first light guide (2), over a section of its length
the second light guide (7) opens into the first light guide (2) at an opening point (11) and is arranged in front of the first light guide in the light emission direction, the impurity arrangement (12) of the second light guide (7) adjoining the impurity arrangement (6) of the first light guide (2) in a transition region (2u) in the light emission direction, the first and the second light guide (2, 7) being formed by injection molding in one piece.

2. Illuminating arrangement (1) according to claim 1, **characterized in that** the impurity arrangement (12) of the second light guide (7) adjoins the impurity arrangement (6) of the first light guide (2) in an overlapping manner in the transition region (2u).

3. Illuminating arrangement (1) according to claim 2, **characterized in that** in the overlapping region the density of the interference points (6, 12) of both light guides (2, 7) decreases in the transition region.

4. Illuminating arrangement (1) according to one of claims 1 to 3, **characterized in that** the interference point arrangement (6) of the first light guide (2) extends essentially over its entire length.

5. Illuminating arrangement (1) according to one of the claims 1 to 4, **characterized in that** the first light guide (2) over most of its length in a central region (2m) lies substantially in a plane within which an end region (2e) is angled.

6. Illuminating arrangement (1) according to one of the claims 1 to 5, **characterized in that** both the first light guide (2) is angled at its feed end over a region (2a) and the second light guide (7) is angled at its feed end over a region (7a), and the angled regions (2a and 7a) of both light guides (2, 7) run approximately parallel to one another.

## Revendications

1. Dispositif d'éclairage (1) pour véhicules automobiles, avec deux guides de lumière (2, 7) qui présentent des dispositifs d'impuretés optiques (6,12) pour l'émission de lumière, et avec deux pièces d'alimentation en lumière (3, 8) auxquelles sont associées des sources de lumière (5,10) pour l'alimentation en lumière des guides de lumière,
**caractérisé en ce que**
un arrangement de points d'interférence (12) est formé sur le deuxième guide de lumière (7), qui est plus court que le premier guide de lumière (2), sur une section de sa longueur,
le deuxième guide de lumière (7) débouche dans le premier guide de lumière (2) en un point d'ouverture (11) et est disposé devant le premier guide de lumière dans la direction d'émission de la lumière, l'agencement d'impuretés (12) du deuxième guide de lumière (7) étant contigu à l'agencement d'impuretés (6) du premier guide de lumière (2) dans une zone de transition (2u) dans la direction d'émission de la lumière, le premier et le deuxième guide de lumière (2, 7) étant moulés par injection en une seule pièce.

2. Dispositif d'éclairage (1) selon la revendication 1, **caractérisé en ce que** l'agencement d'impuretés (12) du deuxième guide de lumière (7) est contigu à l'agencement d'impuretés (6) du premier guide de lumière (2) de manière à se chevaucher dans la zone de transition (2u).

3. Dispositif d'éclairage (1) selon la revendication 2, **caractérisé en ce que** la densité des points d'interférence (6, 12) des deux guides de lumière (2, 7) diminue dans la région de transition.

4. Dispositif d'éclairage (1) selon l'une des revendications 1 à 3, **caractérisé en ce que** le dispositif de points d'interférence (6) du premier guide de lumière (2) s'étend essentiellement sur toute sa longueur.

5. Dispositif d'éclairage (1) selon l'une quelconque des revendications 1 à 4, **caractérisé en ce que** le premier guide de lumière (2) se situe sur la majeure partie de sa longueur dans une région centrale (2m) sensiblement dans un plan au sein duquel une région d'extrémité (2e) est coudée.

6. Dispositif d'éclairage (1) selon l'une des revendications 1 à 5, **caractérisé en ce qu'**aussi bien le premier guide de lumière (2) est coudé à son extrémité d'entrée sur une zone (2a) et le deuxième guide de lumière (7) est coudé à son extrémité d'entrée sur une zone (7a) et les zones coudées (2a et 7a) des deux guides de lumière (2, 7) s'étendent approximativement parallèlement l'une à l'autre.
